(19) Europäisches Patentamt
European Patent Office
Office européen des brevets

(11) **EP 4 578 831 A1**

(12) **EUROPEAN PATENT APPLICATION**

(43) Date of publication:
**02.07.2025 Bulletin 2025/27**

(21) Application number: **24223570.3**

(22) Date of filing: **27.12.2024**

(51) International Patent Classification (IPC):
**C01G 53/50** (2025.01)          **C01G 53/504** (2025.01)
**C01G 53/506** (2025.01)          **C01G 53/84** (2025.01)

(52) Cooperative Patent Classification (CPC):
**C01G 53/50; C01G 53/504; C01G 53/506;**
**C01G 53/84;** C01P 2002/52; C01P 2002/70;
C01P 2004/62; C01P 2006/40

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **27.12.2023 KR 20230192674**

(71) Applicants:
• **SK On Co., Ltd.**
  **Seoul 03161 (KR)**
• **SK innovation Co., Ltd.**
  **Seoul 03188 (KR)**

(72) Inventors:
• **NOH, Mi Jung**
  **34124 Daejeon (KR)**
• **DO, Young Hoon**
  **34124 Daejeon (KR)**
• **CHO, Woong Rae**
  **34124 Daejeon (KR)**
• **KIM, Eun Hyo**
  **34124 Daejeon (KR)**
• **CHOI, Je Nam**
  **34124 Daejeon (KR)**

(74) Representative: **Stolmár & Partner**
  **Patentanwälte PartG mbB**
  **Blumenstraße 17**
  **80331 München (DE)**

(54) **CATHODE ACTIVE MATERIAL FOR LITHIUM SECONDARY BATTERY, CATHODE FOR LITHIUM SECONDARY BATTERY AND LITHIUM SECONDARY BATTERY**

(57) A cathode active material for a lithium secondary battery has a structure of a lithium transition metal oxide. A ratio of a crystallite size of a (003) plane to a crystallite size of a (110) plane measured by an X-ray diffraction (XRD) analysis is in a range from 0.7 to 2.0, and a ratio of the crystallite size of the (003) plane to a crystallite size of a (104) plane measured by the XRD analysis is in a range from 0.7 to 2.0. A cathode for a lithium secondary battery and a lithium secondary battery include the cathode active material for a lithium secondary battery.

FIG. 1

EP 4 578 831 A1

**Description**

TECHNICAL FIELD

The disclosure of this patent application relates to a cathode active material for a lithium secondary battery, a cathode for a lithium secondary battery including the same, and a lithium secondary battery including the same.

BACKGROUND

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of eco-friendly vehicle such as an hybrid vehicle.

Examples of the secondary battery include a lithium secondary battery, a sodium secondary battery, a potassium secondary battery, a nickel-cadmium battery, a nickel-hydrogen battery, etc. The lithium secondary battery among the secondary batteries is being actively developed due to high operational voltage and energy density per unit weight, a high charging rate, a compact dimension, etc.

For example, the lithium secondary battery may include an electrode assembly including a cathode, an anode and a separator, and an electrolyte solution impregnating the electrode assembly. The lithium secondary battery may further include an outer packaging material, e.g., in the form of a pouch for accommodating the electrode assembly and the electrolyte solution.

A lithium metal oxide may be used as the cathode active material of the lithium secondary battery. The lithium metal oxide may preferably have high capacity, high power and extended life-span properties. However, when the lithium metal oxide is designed to have a high power composition, uniformity, and thermal and mechanical stability of particles may be deteriorated to degrade life-span properties and operational reliability of the lithium secondary battery.

SUMMARY

According to an aspect of the present disclosure, there is provided a cathode active material for a lithium secondary battery having improved charge/discharge property and reliability.

According to an aspect of the present disclosure, there is provided a cathode for a lithium secondary battery battery including the cathode active material.

According to an aspect of the present disclosure, there is provided a lithium secondary battery including the cathode active material.

A cathode active material for a lithium secondary battery has a structure of a lithium transition metal oxide. A ratio of a crystallite size of a (003) plane to a crystallite size of a (110) plane measured by an X-ray diffraction (XRD) analysis is in a range from 0.7 to 2.0, and a ratio of the crystallite size of the (003) plane to a crystallite size of a (104) plane measured by the XRD analysis is in a range from 0.7 to 2.0.

In some embodiments, the crystallite size of the (003) plane measured by the XRD analysis may be 350 nm or more.

In some embodiments, the crystallite size of the (003) plane measured by the XRD analysis may be in a range from 350 nm to 700 nm.

In some embodiments, the cathode active material may have a single crystal form.

In some embodiments, the cathode active material has a layered structure.

In some embodiments, the ratio of the crystallite size of the (003) plane to the crystallite size of the (110) plane measured by the XRD analysis may be in a range from 0.7 to 1.7.

In some embodiments, the ratio of the crystallite size of the (003) plane to the crystallite size of the (104) plane measured by the XRD analysis may be in a range from 0.7 to 1.7.

In some embodiments, the crystallite size of the (104) plane measured by the XRD analysis may be in a range from 300 nm to 760 nm.

In some embodiments, the crystallite size of the (110) plane measured by the XRD analysis may be in a range from 300 nm to 700 nm.

In some embodiments, the lithium transition metal oxide may include nickel.

In some embodiments, a content of nickel based on 100 mol% of total metal elements excluding lithium in the lithium transition metal oxide may be 60 mol% or more.

In some embodiments, the lithium transition metal oxide may further include manganese.

In some embodiments, the lithium transition metal oxide may be represented by Chemical Formula 1.

[Chemical Formula 1]  $Li_aNi_xMn_yM_{1-x-y}O_2$

In Chemical Formula 1, M includes at least one of Co, Mg, Sr, Ba, B, Al, Zr, Ti, Y and W, and $0.95 < a < 1.1$, $0.6 \leq x \leq 0.9$, and $0.04 \leq y \leq 0.3$.

A cathode for a lithium secondary battery includes a cathode current collector, and a cathode active material layer disposed on at least one surface of the cathode current collector. The cathode active material layer includes the above-described cathode active material for a lithium secondary battery.

A lithium secondary battery includes a cathode including the above-described cathode active material for a lithium secondary battery, and an anode facing the cathode.

In a cathode active material for a lithium secondary battery according to embodiments of the present disclosure, a ratio of a crystallite size of a (110) plane and a crystallite size of a (003) plane measured by an XRD analysis may be maintained within an appropriate range. Accordingly, a change in a crystal structure of the cathode active material for a lithium secondary battery may be suppressed, and a migration distance of lithium ions may be appropriately controlled.

In the cathode active material for a lithium secondary battery, a ratio of a crystallite size of a (104) plane and a crystallite size of a (003) plane measured by an XRD analysis may be maintained within an appropriate range. A crystal structure stability of the cathode active material for a lithium secondary battery may be further enhanced. For example, even when the cathode active material contains a high content of nickel, a power and a capacity may be increased without deterioration of operation stability and life-span properties while maintaining improved structural stability.

The lithium secondary battery of the present disclosure may be widely applied in green technology fields such as an electric vehicle, a battery charging station, a solar power generation, a wind power generation, etc., using a battery, etc. The lithium secondary battery according to the present disclosure may be used for eco-friendly electric vehicles and hybrid vehicles to prevent a climate change by suppressing air pollution and greenhouse gas emissions. etc.

BRIEF DESCRIPTION OF THE DRAWINGS

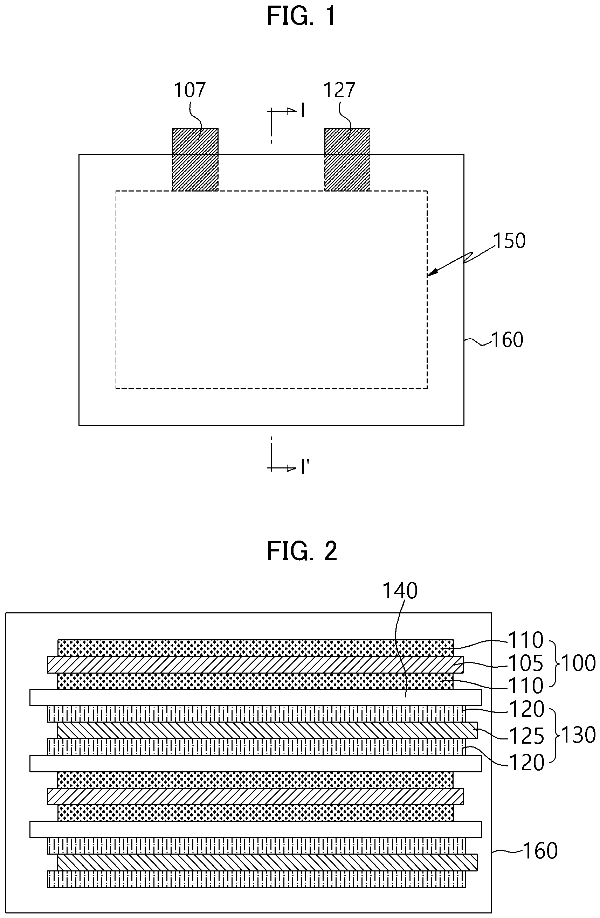

FIGS. 1 and 2 are a schematic plan view and a cross-sectional view, respectively, illustrating a lithium secondary battery in accordance with example embodiments.

DETAILED DESCRIPTION OF THE EMBODIMENTS

According to embodiments of the present disclosure, a cathode active material for a lithium secondary battery having predetermined crystal properties is provided.

According to embodiments of the present disclosure, a cathode for a lithium secondary battery and a lithium secondary battery including the cathode active material are provided.

The terms "top surface," "bottom surface," etc. used herein indicate relative positions of each component and do not specify absolute positions.

According to embodiments of the present disclosure, a cathode active material for a lithium secondary battery (hereinafter, abbreviated as "cathode active material") includes a lithium transition metal oxide. For example, the lithium transition metal oxide may include nickel (Ni). For example, the cathode active material may include a lithium nickel-based oxide.

In example embodiments, nickel (Ni) may be included in the largest amount (mol% or atomic%) of metal elements other than lithium included in the lithium transition metal oxide,

In some embodiments, a content of nickel in the lithium transition metal oxide may be 60 mol% or more based on 100 mol% of total metal elements excluding lithium. For example, the content of nickel in the lithium transition metal oxide may be 60 mol% or more and less than 100 mol%, in a range from 60 mol% to 98 mol%, 60 mol% or more and less than 90 mol%, or in a range from 60 mol% to 80 mol% based on the total metal elements excluding lithium.

Nickel may be provided as a transition metal related with power and capacity of the lithium secondary battery. Thus, the cathode active material may include a high content of nickel (High-Ni) composition, e.g., 60 mol% or more of nickel, so that a high-capacity cathode and a high-capacity lithium secondary battery may be provided.

In example embodiments, the lithium transition metal oxide may further include another transition metal in addition to nickel, such as manganese (Mn). For example, as the content of nickel increases, long-term storage stability and life-span stability of the cathode or the secondary battery may be relatively lowered. Life-span stability, capacity retention properties and penetration stability of the cathode active material may be further improved by the transition metal such as manganese.

In example embodiments, the cathode active material may have a layered structure. For example, the lithium transition metal oxide may include a lithium layer and a transition metal layer in a crystal structure.

In example embodiments, the cathode active material may have a single crystal structure in a crystallographic aspect. The single crystal may indicate a crystal structure that does not include crystal grains or grain boundaries at an inside of the particle. For example, the single crystal structure may be distinguished from a polycrystalline structure having multiple crystals at the inside of the particle. In an embodiment, the single crystal structure may be confirmed through a scanning electron microscope (SEM), a transmission electron microscope (TEM), an electron-backscattered diffraction (EBSD), etc. For example, crystal grain orientation information of the particle can be measured using the EBSD, and the single crystal structure and the polycrystal structure can be distinguished through a crystal grain orientation distribution of the particle.

The cathode active material has a single crystal structure to have improved structural stability. Thus, cracks at the inside of the particle may be suppressed, and heat and shock propagation due to the cracks may be prevented or reduced. Accordingly, even when, e.g., a pressing strength is increased to manufacture a high-density cathode, structural damages and resistance increase of the cathode active material may be prevented.

According to embodiments of the present disclosure, a ratio of a crystallite size of a (003) plane to a crystallite size of a (110) plane measured through an XRD (X-ray diffraction) analysis of the cathode active material is in a range from 0.7 to 2.0.

The crystallite size may be calculated from a Scherrer equation using a full width at half maximum (FWHM) obtained through the XRD analysis as shown in Equation 1 below.

[Equation 1]

$$ L = \frac{0.9\lambda}{\beta cos\theta} $$

In Equation 1, L is the crystallite size, $\lambda$ is an X-ray wavelength, $\beta$ is a full width at half maximum of a peak corresponding to each crystal plane, and $\theta$ is a diffraction angle (rad) of the peak corresponding to each crystal plane.

For example, the XRD analysis may be performed on a dried powder of the lithium transition metal oxide particles using Cu-K$\alpha$ rays as a light source, in a diffraction angle (2$\theta$) range of 10° to 120°, at a scan rate of 0.0065°/step.

The (110) plane of the cathode active material may act as a factor related to a movement of ions. For example, lithium ions may be diffused through the (110) plane within the particle. The (003) plane of the cathode active material may be used as a reference plane of the crystallite size.

The crystallite size of the (110) plane of the cathode active material may be controlled within the above range relatively to the crystallite size of the (003) plane, so that stability of the crystal structure may be improved while promoting the movement of the lithium ions.

For example, if the crystallite size of the (003) plane increases excessively relatively to the crystallite size of the (110) plane, the lithium ions may be transferred through the (003) plane to hinder the movement of the lithium ions.

Additionally, in a cathode active material having the layered structure and the high nickel content composition, a cation mixing phenomenon in which lithium ions in a lithium layer and nickel ions in a transition metal layer are irreversibly substituted may occur. In this case, the cation mixing phenomenon may propagate from the (110) plane to an inside of the particle. Accordingly, if the crystallite size of the (110) plane decreases excessively, the substitution of the lithium ions and the nickel ions may be increased to deteriorate the crystal structure.

In an example, if the crystallite size of the (110) plane increases excessively relatively to the crystallite size of the (003) plane, a transfer distance of lithium ions through the (110) plane may be increased to lower capacity and efficiency.

In some embodiments, the ratio of the crystallite size of the (003) plane to the crystallite size of the (110) plane of the cathode active material may be in a range from 0.7 to 1.7, from 0.7 to 1.6, from 0.8 to 1.6, from 0.9 to 1.6, or from 1.0 to 1.6. In the above range, stability of the crystal structure, the life-span properties and the capacity properties of the lithium secondary battery may be further improved.

According to embodiments of the present disclosure, a ratio of the crystallite size of the (003) plane to the crystallite size of a (104) plane measured by the XRD analysis of the cathode active material is in a range from 0.7 to 2.0. The crystallite size of the (104) plane may also be obtained from the Scherrer equation (Equation 1) using the full width at half maximum (FWHM) obtained through the XRD analysis.

A crystal growth at the (104) plane and (003) plane of the cathode active material may be controlled in the above range, so that mobility and diffusion properties of the lithium ions may be enhanced while improving particle strength and stability of the crystal structure.

For example, when the crystallite size ratio of the (003) plane to the (104) plane exceeds 2.0, a change in the crystal structure during charge and discharge may be increased. In this case, a stress due to the crystal structure may be applied on the cathode active material particles to deteriorate the life-span properties.

For example, when the crystallite size ratio of the (003) plane to the (104) plane is less than 0.7, transfer and diffusion distances of the lithium ions may be increased, and a particle strength may be lowered.

In some embodiments, the ratio of the crystallite size of the (003) plane to the crystallite size of the (104) plane of the cathode active material may be in a range from 0.7 to 1.7, from 0.7 to 1.6, from 0.8 to 1.6, or from 0.9 to 1.6. In the above range, the life-span properties, the capacity properties and efficiency of the cathode active material may be further improved.

In example embodiments, the crystallite size of the (003) plane of the cathode active material measured by the XRD may be 350 nm or more. Accordingly, the particle strength of the cathode active material may be increased, and the cathode active material may have an ideal single crystal structure, so that cracks in the particles may be reduced.

In some embodiments, the crystallite size of the (003) plane of the cathode active material may be 700 nm or less. Accordingly, the change in the crystal structure due to repeated charge/discharge may be reduced, and cracks and the resistance increase may be suppressed, so that the capacity and life-span properties may be improved even in a high-temperature environment.

For example, the crystallite size of the (003) plane of the cathode active material may be in a range from 350 nm to 700 nm, from 400 nm to 700 nm, from 450 nm to 700 nm, or from 450 nm to 650 nm. Iin the above range, high temperature life properties and capacity properties may be further improved.

In some embodiments, the crystallite size of the (110) plane of the cathode active material measured by the XRD may be in a range from 300 nm to 700 nm. In this range, the transfer and diffusion distance of the lithium ions may be more appropriately controlled, and the change of the crystal structure, the crack generation and the resistance increase may be suppressed.

In an embodiment, the crystallite size of the (110) plane of the cathode active material may be greater than 300 nm and 700 nm or less, in a range from 320 nm to 700 nm, from 320 nm to 650 nm, or from 320 nm to 500 nm.

In some embodiments, the crystallite size of the (104) plane of the cathode active material measured by the XRD may be in a range from 300 nm to 760 nm. In this range, an aspect ratio of the cathode active material may be controlled to an appropriate range, and structural stability, capacity and power properties may be further improved. Thus, gas and crack generation may be suppressed even in the high-temperature environment, and stable capacity properties may be provided.

In an embodiment, the crystallite size of the (104) plane of the cathode active material may be in a range from 300 nm to 750 nm, from 300 nm to 700 nm, from 320 nm to 550 nm, or from 320 nm to 400 nm.

The individual values of the crystallite sizes of the (003) plane, (110) plane and/or (104) plane may be controlled together with the crystallite size ratio as described above, a crystal growth direction of the cathode active material, the transfer and diffusion properties of lithium ions and the crystal structure stability may be further improved.

In an embodiment, the lithium transition metal oxide may be represented by Chemical Formula 1 below.

$$[\text{Chemical Formula 1}] \qquad \text{Li}_a\text{Ni}_x\text{Mn}_y\text{M}_{1-x-y}\text{O}_2$$

In Chemical Formula 1, M includes at least one of Co, Mg, Sr, Ba, B, Al, Zr, Ti, Y and W, and $0.95 < a < 1.1$, $0.6 \leq x \leq 0.9$, and $0.04 \leq y \leq 0.3$.

In some embodiments, the cathode active material may further include sulfur (S). For example, some of oxygen element sites in a crystal lattice of the lithium transition metal oxide may be substituted with sulfur elements. The introduction of sulfur element into the crystal structure may further stabilize the crystal structure, thereby suppressing a crystal collapse due to the cation mixing and a lithium desorption, thereby further improving the capacity/power properties and the life-span properties.

In some embodiments, a content of sulfur in the lithium transition metal oxide may be in a range from 600 ppm to 2,000 ppm based on a total weight of the lithium transition metal oxide. The sulfur content may be detected by an inductively coupled plasma (ICP). In the above range, the crystal stability, and the life-span and capacity properties of the cathode active material may be further improved.

In an embodiment, the sulfur content in the lithium transition metal oxide may be in a range from 600 ppm to 1,800 ppm, from 700 ppm to 1,600 ppm, or from 750 ppm to 1,500 ppm.

In an embodiment, the lithium transition metal oxide may be represented by Chemical Formula 2 below.

$$[\text{Chemical Formula 2}] \qquad \text{Li}_a\text{Ni}_x\text{Mn}_y\text{M}_{1-x-y}\text{O}_{2-z}\text{S}_z$$

In Chemical Formula 2, M includes at least one of Co, Mg, Sr, Ba, B, Al, Zr, Ti, Y and W, and $0.95 < a < 1.1$, $0.6 \leq x \leq 0.9$, $0.04 \leq y \leq 0.3$ and $0 < z \leq 0.1$.

In some embodiments, M in Chemical Formulae 1 and 2 may include Co, and may further include at least one of Al, Zr, Ti, Y and W. The metal elements may promote crystal growth of the (104) plane and the (110) plane during the production of the cathode active material. Accordingly, the crystallite size ratio of the cathode active material may be easily controlled in an appropriate range.

In example embodiments, the above-described cathode active material may be prepared by the following processes.

In example embodiments, active material metal sources may be prepared. The active metal sources s may include a nickel source, a manganese source or a cobalt source.

Examples of the nickel source include nickel sulfate ($NiSO_4$), nickel hydroxide ($Ni(OH)_2$), nickel nitrate ($Ni(NO_3)_2$), nickel acetate ($Ni(CH_3CO_2)_2$), or a hydrate thereof.

Examples of the manganese source include manganese sulfate ($MnSO_4$), manganese hydroxide ($Mn(OH)_2$), manganese nitrate ($Mn(NO_3)_2$), manganese acetate ($Mn(CH_3CO_2)_2$), or a hydrate thereof.

Examples of the cobalt source include cobalt sulfate ($CoSO_4$), cobalt hydroxide ($Co(OH)_2$), cobalt nitrate ($Co(NO_3)_2$), cobalt carbonate ($CoCOs$), or a hydrate thereof.

In some embodiments, nickel sulfate, manganese sulfate, and cobalt sulfate may be used as the nickel source, manganese source, and cobalt source, respectively. Accordingly, sulfur (S) elements may remain in an active material precursor.

The above-described active material metal sources may be added and mixed in distilled water to form a transition metal solution. In example embodiments, the active material metal sources may be reacted through a coprecipitation method to obtain the active material precursor. For example, the active material precursor may be prepared in the form of a nickel-manganese-cobalt hydroxide.

In an embodiment, a precipitating agent and/or a chelating agent may be used to promote the coprecipitation reaction.

The precipitating agent may include, e.g., an alkaline compound such as sodium hydroxide (NaOH), sodium carbonate ($Na_2CO_3$), or the like. The chelating agent may include, e.g., ammonia water, ammonium carbonate, or the like.

For example, the precipitating agent may be added to the transition metal solution at a temperature ranging from about 50 °C to 70 °C and reacted. In an embodiment, a molar ratio of the precipitating agent (e.g., NaOH) to the molar number of transition metals included in the transition metal solution may be greater than 1 and less than 3, e.g., in a range from 1.4 to 2.5.

In some embodiments, a precipitated product may be heat-treated to obtain a cathode active material precursor. For example, the active material precursor may be formed by heat-treating at the reaction temperature for 35 to 60 hours.

In an embodiment, the active material precursor may be washed with distilled water. The sulfur (S) content of the active material precursor may be adjusted to a range from 1,000 ppm to 3,000 ppm by the washing. Sulfur (S) may be included in the above range in the active material precursor, so that the crystallites of the (104) plane and of the (110) plane may be easily grown even at a relatively low temperature.

The active material precursor may be reacted with a lithium source to prepare a lithium transition metal oxide. The lithium source may include, e.g., lithium carbonate ($Li2CO_3$), lithium nitrate ($LiNO_3$), lithium acetate ($CH_3COOLi$), lithium oxide ($Li_2O$), lithium hydroxide (LiOH), or the like. These may be used alone or in a combination of two or more therefrom.

For example, after mixing the active material precursor with the lithium source, the lithium transition metal oxide particle as a cathode active material may be prepared by a calcination process.

In some embodiments, a compound containing Mg, Sr, Ba, B, Al, Si, Ti, Zr, Y or W may be used together with the lithium source. For example, a salt (carbonate, etc.), a hydroxide or an oxide of the metal elements may be reacted with the lithium source.

The metal elements may promote the crystal growth on the (104) plane and the (110) plane of the active material precursor, and may promote doping of the sulfur element. For example, the metal element-containing compound may be used as a crystal growth promoter. The crystallite size of the (104) plane and the crystal size of the (110) plane may be easily controlled within a desired range by a metal element source such as Al, Zr or W.

In some embodiments, the crystal growth promoter may include a Zr or W-containing compound and an Al-containing compound. For example, the crystal growth promoter may include a mixture of at least one of a Zr oxide or a W oxide, and an Al oxide. Accordingly, the crystallite size of each crystal plane of the cathode active material may be easily controlled to a desired range.

In an embodiment, the metal elements may be consumed for the crystal growth of the active material precursor and may not be included in the cathode active material after the calcination.

In an embodiment, the metal elements may exist as a dopant of the cathode active material by substituting some of Ni, Co and Mn at the inside of the particle, or may exist on a surface of the active material particle as a surface coating agent.

In some embodiments, a temperature of the calcination may be in a range from 700 °C to 1,000 °C, from 800°C to 1,000 °C, or from 850°C to 980 °C. In the calcination temperature range, a lithium metal oxide in a single crystal form may be easily formed while promoting the growth of the crystal plane.

In some embodiments, a heating rate of the calcination process may be in a range from 0.5 °C/min to 4 °C/min, or from 1 °C/min to 3 °C/min.

In some embodiments, a calcination time may be in a range from 5 to 24 hours, or from 10 to 20 hours.

The growth of the (104) plane and the (110) plane may be promoted by the sulfur element included in the active material precursor, and a crystal growth direction may be controlled so that the crystallite size ratio may be maintained in an appropriate range.

In some embodiments, a cleaning process may be further performed on the lithium transition metal oxide particles prepared as the cathode active material. The cleaning process may include washing using an aqueous or organic solvent. Lithium impurities (e.g., $Li_2O$, $Li_2CO_3$, $LiOH$, etc.) remaining on the surface of the lithium transition metal oxide particles may be removed by the cleaning process.

FIG. 1 and FIG. 2 are a schematic plan view and a schematic cross-sectional view, respectively, illustrating a lithium secondary batteries according to example embodiments. Hereinafter, the cathode for a lithium secondary battery and the lithium secondary battery will be described together with reference to FIG. 1 and FIG. 2.

Referring to FIGS. 1 and 2, the lithium secondary battery may include a cathode 100 and an anode 130 facing the cathode 100.

The cathode 100 may include a cathode active material layer 110 formed by coating the above-described cathode active material on a cathode current collector 105.

For example, the above-described cathode active material may be mixed and stirred with a binder, a conductive material and/or a dispersive agent in a solvent to prepare a slurry. The slurry may be coated on the cathode current collector 105, and then dried and pressed to form the cathode 100.

The cathode current collector 105 may include stainless steel, nickel, aluminum, titanium, or an alloy thereof. The cathode current collector 105 may also include aluminum or stainless steel surface-treated with carbon, nickel, titanium or silver.

The above binder may include, e.g., an organic binder such as vinylidene fluoride-hexafluoropropylene copolymer (PVDF-co-HFP), polyvinylidene fluoride (PVDF), polyacrylonitrile, polymethylmethacrylate, etc., or an aqueous binder such as styrene-butadiene rubber (SBR), and may be used together with a thickener such as carboxymethyl cellulose (CMC).

For example, a PVDF-based binder may be used as a cathode binder. In this case, an amount of the binder for forming the cathode active material layer may be reduced, and an amount of the cathode active material may be relatively increased, thereby improving power and capacity of the secondary battery.

The conductive material may be included to promote an electron transfer between active material particles. For example, the conductive material may include a carbon-based conductive material such as graphite, carbon black, graphene and a carbon nanotube, and/or a metal-based conductive material including such as tin, tin oxide, titanium oxide and a perovskite material including $LaSrCoO_3$, LaSrMnO3. etc.

The anode 130 may include an anode current collector 125, and an anode active material layer 120 formed by coating an anode active material on the anode current collector 125.

The anode active material widely known in the art capable of absorbing and desorbing lithium ions may be used without any specific limitation. For example, a carbon-based material such as a crystalline carbon, an amorphous carbon, a carbon composites and a carbon fiber; a lithium alloy; a silicon (Si)-based compound or tin, or the like, may be used. Examples of the amorphous carbon include hard carbon, coke, a mesocarbon microbead (MCMB) and a mesophase pitch-based carbon fiber (MPCF).

Examples of the crystalline carbon include a graphite-based carbon such as natural graphite, artificial graphite, a graphitized coke, a graphitized MCMB and a graphitized MPCF. Elements included in the lithium alloy include aluminum, zinc, bismuth, cadmium, antimony, silicon, lead, tin, gallium or indium.

The silicon-based compound may include, e.g., a silicon oxide or a silicon-carbon composite compound such as silicon carbide (SiC).

For example, a slurry may be prepared by mixing and stirring the above-described binder, the conductive material, a thickener, etc., in the anode active material and a solvent. The slurry may be coated on at least one surface of the anode current collector 125, and then dried and pressed to prepare the anode 130.

Materials substantially the same as or similar to the above-described materials used in the cathode active material layer 110 may also be used. In some embodiments, the binder for forming the anode may include, e.g., an aqueous binder such as styrene-butadiene rubber (SBR) for compatibility with the carbon-based active material, and may be used together with the thickener such as carboxymethyl cellulose (CMC).

In some embodiments, a separator 140 may be interposed between the cathode 100 and the anode 130. The separator 140 may include a porous polymer film formed of a polyolefin polymer such as an ethylene homopolymer, a propylene homopolymer, an ethylene/butene copolymer, an ethylene/hexene copolymer, an ethylene/methacrylate copolymer, or the like. The separator 140 may also include a nonwoven fabric formed of a high-melting point glass fiber, a polyethylene terephthalate fiber, or the like.

In example embodiments, an electrode cell may be defined by the cathode 100, the anode 130 and the separator 140, and a plurality of the electrode cells may be repeatedly stacked to form an electrode assembly 150. In some embodiments, the electrode assembly 150 may be a winding type, a stacking type, a z-folding type, or a stack-folding type.

The electrode assembly 150 may be accommodated in a case 160 together with an electrolyte solution, thereby defining a lithium secondary battery. For example, the electrolyte solution may impregnate the electrode assembly 150.

As illustrated in FIG. 1, electrode tabs (cathode tabs and anode tabs) may protrude from the cathode collector 105 and the anode collector 125 included in each electrode cell, and may extend to a side of the case 160. The electrode tabs may be fused together with the side of the case 160 to form electrode leads (a cathode lead 107 and an anode lead 127) that may extend or may be exposed to an outside of the case 160.

The lithium secondary battery may be manufactured in a cylindrical shape using a can, a prismatic shape, a pouch shape or a coin shape using.

Experimental Example

Example 1

(1) Preparation of cathode active material

A transition metal solution was prepared by mixing $NiSO_4$, $CoSO_4$ and $MnSO_4$ in a molar ratio of 60:10:30 using distilled water bubbled with $N_2$ for 24 hours to remove internal dissolved oxygen. The transition metal solution was introduced into a reactor at 60°C, and NaOH and $NH_3H_2O$ were introduced. NaOH was introduced into the reactor at a constant rate so that a molar ratio of the transition metal and NaOH in the transition metal solution was 1:2, $NH_3H_2O$ was introduced in an amount more than 4 times that of the introduced transition metal, and a co-precipitation reaction was performed for 48 hours.

The reaction precipitate was separated using a centrifuge, and the reaction precipitate was washed with distilled water to obtain an active material precursor in which a content of sulfur elements was controlled in a range of 1,000 ppm to 3,000 ppm.

The active material precursor, $Li_2CO_3$ as a lithium source, $Al_2O_3$ and $ZrO_2$ as crystal growth promoters were uniformly mixed. The mixture was placed in a furnace and heated to 980 °C at a heating rate of 2 °C/min, maintained at 980°C for 10 hours, and then maintained at 800°C for 2 hours. During the heating and temperature maintenance, oxygen was continuously passed at a flow rate of 10 mL/min.

After the calcination, natural cooling was performed to room temperature and classification was performed to produce a single-crystal type cathode active material.

(2) Fabrication of secondary battery

The cathode active material, Denka Black as a conductive material and PVDF as a binder were mixed in a mass ratio of 94:3:3 to prepare a cathode mixture. The cathode mixture was coated on an aluminum current collector, and then dried and pressed to obtain a cathode. After the pressing, an electrode density of the cathode was adjusted to 3.5 g/cc or more.

An anode slurry containing 93 wt% natural graphite as an anode active material, 5 wt% KS6 as a flake type conductive material, 1 wt% styrene-butadiene rubber (SBR) as a binder, and 1 wt% carboxymethyl cellulose (CMC) as a thickener was prepared. The anode slurry was coated on a copper substrate, dried and pressed to prepare an anode.

The cathode and the anode prepared as described above were notched to a predetermined size, and then stacked with a separator (polyethylene, thickness: 25 μm) interposed between the cathode and the anode. Thereafter, tab portions of the cathode and the anodes were welded. The welded cathode/separator/anode assembly was placed in a pouch, and three sides except for an electrolyte injection portion were sealed. A region including the electrode tab was included in the sealing portion. An electrolyte solution was injected through the electrolyte injection side, the electrolyte injection side was sealed, and then impregnated for more than 12 hours.

The electrolyte solution was prepared by adding 1 wt% of vinylene carbonate (VC), 0.5 wt% of 1,3-propene sultone (PRS), and 0.5 wt% of lithium bis(oxalato)borate (LiBOB) to a 1M $LiPF_6$ solution using a mixed solvent of EC/EMC/DEC (25/45/30; volume ratio).

(3) Measurement of crystallite size

Crystallite sizes of (003), (104) and (110) planes of the cathode active material were measured through an XRD analysis and the Scherrer equation of Equation 1, and the crystallite size ratio was calculated. The measurement results are shown in Table 2 below.

The specific XRD analysis equipment and conditions are shown in Table 1 below.

[Table 1]

| XRD(X-Ray Diffractometer) EMPYREAN | |
| --- | --- |
| Maker | PANalytical |
| Anode material | Cu |

8

(continued)

| XRD(X-Ray Diffractometer) EMPYREAN | |
|---|---|
| K-Alpha1 wavelength | 1.540598 Å |
| Generator voltage | 45 kV |
| Tube current | 40 mA |
| Scan Range | 10~120° |
| Scan Step Size | 0.0065° |
| Divergence slit | 1/4° |
| Antiscatter slit | 1/2° |

Example 2

A cathode active material and a secondary battery were manufactured by the same methods as those in Example 1, except that the mixture of the active material precursor and $Li_2CO_3$ was placed in the furnace, heated to 980°C at a heating rate of 2°C/min, maintained at 980°C for 10 hours, and then cooled in the preparation of the cathode active material.

Example 3

A cathode active material and a secondary battery were manufactured by the same methods as those in Example 2, except that the molar ratio of $NiSO_4$, $CoSO_4$ and $MnSO_4$ was changed to 75:0:25, and the calcination temperature for the mixture was changed from 980°C to 850°C in the preparation of the cathode active material.

Example 4

A cathode active material and a secondary battery were manufactured by the same methods as those in Example 1, except that the molar ratio of $NiSO_4$, $CoSO_4$ and $MnSO_4$ was changed to 75:0:25, and the calcination temperature for the mixture was changed from 980°C to 850°C in the preparation of the cathode active material.

Example 5

A cathode active material and a secondary battery were manufactured by the same methods as those in Example 1, except that the molar ratio of $NiSO_4$, $CoSO_4$ and $MnSO_4$ was changed to 80:8:12 and the calcination temperature for the mixture was changed from 980°C to 800°C in the preparation of the cathode active material.

Example 6

A cathode active material and a secondary battery were manufactured by the same methods as those in Example 2, except that the molar ratio of $NiSO_4$, $CoSO_4$ and $MnSO_4$ was changed to 90:4:6 and the calcination temperature for the mixture was changed from 980°C to 750°C in the preparation of the cathode active material.

Comparative Example 1

A cathode active material and a secondary battery were manufactured by the same methods as those in Example 2, except that the mixture did not include the crystal growth promoter and the calcination temperature was changed from 980°C to 850°C in the preparation of the cathode active material.

Comparative Example 2

A cathode active material and a secondary battery were manufactured by the same methods as those in Comparative Example 1, except that the molar ratio of $NiSO_4$, $CoSO_4$ and $MnSO_4$ was changed to 75:0:25 and the calcination temperature was changed to 750 °C in the preparation of the cathode active material.

Comparative Example 3

A cathode active material and a secondary battery were manufactured by the same methods as those in Example 4, except that the calcination temperature for the mixture was changed from 850 °C to 700 °C in the preparation of the cathode active material.

Comparative Example 4

A cathode active material and a secondary battery were manufactured by the same methods as those in Example 6, except that the calcination temperature for the mixture was changed from 750 °C to 680 °C in the preparation of the cathode active material.

Comparative Example 5

A cathode active material and a secondary battery were manufactured by the same methods as those in Example 1, except that the mixture was placed in the calcination furnace and heated to 980 °C at a heating rate of 5 °C/min, maintained at 980 °C for 5 hours, and then maintained at 800 °C for 2 hours in the preparation of the cathode active material.

Comparative Example 6

A cathode active material and a secondary battery were manufactured by the same methods as those in Comparative Example 5, except that only $Al_2O_3$ was added as the crystal growth promoter in the preparation of the cathode active material.

Comparative Example 7

A cathode active material and a secondary battery were manufactured by the same methods as those in Example 1, except that the calcination temperature was changed from 980°C to 850°C, and only $Al_2O_3$ was added as the crystal growth promoter in the preparation of the cathode active material.

Comparative Example 8

A cathode active material and a secondary battery were manufactured by the same methods as those in Example 1, except that the calcination temperature was changed from 980°C to 850°C, and only $ZrO_2$ was added as the crystal growth promoter in the preparation of the cathode active material.

[Table 2]

| | Ni molar ratio | crystallite size (nm) | | | crystallite size ratio ((003)/(104)) | crystallite size ratio ((003)/(110)) |
|---|---|---|---|---|---|---|
| | | (003) plane | (104) plane | (110) plane | | |
| Example 1 | 0.6 | 357 | 405 | 441 | 0.88 | 0.81 |
| Example 2 | 0.6 | 485 | 330 | 350 | 1.47 | 1.39 |
| Example 3 | 0.75 | 513 | 727 | 555 | 0.71 | 0.92 |
| Example 4 | 0.75 | 523 | 326 | 342 | 1.60 | 1.53 |
| Example 5 | 0.8 | 533 | 442 | 697 | 1.21 | 0.76 |
| Example 6 | 0.9 | 688 | 755 | 518 | 0.91 | 1.33 |
| Comparative Example 1 | 0.6 | 395 | 170 | 140 | 232 | 2.82 |
| Comparative Example 2 | 0.75 | 431 | 210 | 201 | 2.05 | 2.14 |
| Comparative Example 3 | 0.75 | 139 | 67 | 59 | 2.07 | 2.36 |
| Comparative Example 4 | 0.9 | 251 | 85 | 64 | 2.95 | 3.92 |
| Comparative Example 5 | 0.6 | 214 | 329 | 690 | 0.65 | 0.31 |

(continued)

|  | Ni molar ratio | crystallite size (nm) | | | crystallite size ratio ((003)/(104)) | crystallite size ratio ((003)/(110)) |
|---|---|---|---|---|---|---|
|  |  | (003) plane | (104) plane | (110) plane |  |  |
| Comparative Example 6 | 0.6 | 224 | 439 | 243 | 0.51 | 0.92 |
| Comparative Example 7 | 0.6 | 230 | 134 | 162 | 1.72 | 1.42 |
| Comparative Example 8 | 0.6 | 210 | 143 | 114 | 1.47 | 1.84 |

Experimental Example

(1) Evaluation on high-temperature life-span retention

The lithium secondary batteries of Examples and Comparative Examples were repeatedly subjected to CC/CV charging (0.1C 4.3V, 0.05C CUT-OFF) and CC discharging (0.1C 3.0V CUT-OFF) at 25 °C twice, and a discharge capacity C1 at the second cycle was measured. The lithium secondary batteries were subjected to CC/CV charging (0.1C 4.3V, 0.05C CUT-OFF).

The charged lithium secondary batteries were stored at 60°C for 3 weeks, left at room temperature for an additional 30 minutes, and CC discharged (0.5C 3.0V CUT-OFF) to measure a discharge capacity C2.

A capacity retention after high-temperature storage was calculated as follows.

$$\text{Capacity retention after high-temperature storage (\%)} = C2/C1 \times 100\%$$

(2) Evaluation on high-temperature resistance increase ratio

The lithium secondary batteries of Examples and Comparative Examples were set to SOC50% by CC/CV charging (0.1C, 0.05C) at 25°C. The lithium secondary batteries were discharged by a 1C current, and a voltage before the discharge (V0) and a voltage during discharge (V1) after 10 seconds were measured. A room temperature resistance was calculated as follows.

$$\text{Room temperature resistance} = (V1-V0)/1C$$

The lithium secondary batteries of Examples and Comparative Examples were adjusted to SOC50 by CC/CV charging (0.1C, 0.05C) at 60°C. The lithium secondary batteries were discharged by a 1C current, and a voltage before the discharge (V2) and a voltage during discharge (V3) after 10 seconds were measured. A high temperature resistance was calculated as follows.

$$\text{High temperature resistance} = (V3-V2)/1C$$

A ratio of the high temperature resistance to the room temperature resistance was calculated as a percentage to evaluate a high temperature resistance increase ratio.

(3) Measurement of crystallite size retention

After evaluating the high-temperature life-span retention, the crystallite sizes (A2) of the (003) plane, (104) plane and (110) plane of the cathode active material were measured, and a retention ratio compared to initial crystallite sizes (A1) were measured.

A crystallite size retention was calculated as follows.

$$\text{Crystallite size retention} = \{1-(|A2-A1|/A1)\} \times 100\%$$

The evaluation results are shown in Table 3 below.

[Table 3]

| | high temperature life-span retention (%) | high temperature resistance increase ratio (%) | crystallite size retention (%) | | |
| --- | --- | --- | --- | --- | --- |
| | | | (003) plane | (104) plane | (110) plane |
| Example 1 | 98 | 108 | 68 | 69 | 94 |
| Example 2 | 99 | 110 | 68 | 69 | 95 |
| Example 3 | 98 | 120 | 67 | 71 | 95 |
| Example 4 | 99 | 115 | 67 | 69 | 95 |
| Example 5 | 95 | 135 | 68 | 70 | 96 |
| Example 6 | 94 | 140 | 68 | 71 | 95 |
| Comparative Example 1 | 96 | 180 | 67 | 66 | 92 |
| Comparative Example 2 | 89 | 230 | 68 | 68 | 93 |
| Comparative Example 3 | 82 | 120 | 62 | 62 | 90 |
| Comparative Example 4 | 82 | 128 | 63 | 62 | 89 |
| Comparative Example 5 | 96 | 120 | 62 | 68 | 95 |
| Comparative Example 6 | 96 | 130 | 63 | 69 | 91 |
| Comparative Example 7 | 94 | 210 | 63 | 64 | 91 |
| Comparative Example 8 | 92 | 230 | 62 | 65 | 87 |

Referring to Table 3, in Examples, the high-temperature life-span and high-temperature resistance properties of the lithium secondary battery were improved. Additionally, even when the nickel content of the cathode active material increased, the high-temperature life-span retention was improved. In Examples, the crystallite size change ratio of the cathode active material after the high-temperature cycle was smaller than that from Comparative Examples.

In Comparative Examples, when the lithium secondary battery was charged and discharged at high temperature, the life-span retention of the lithium secondary battery was drastically reduced or the resistance was explicitly increased compared to those in the initial state. Further, the resistance at high temperature was increased. In Comparative Examples, the crystallite size of the cathode active material was explicitly increased after the high-temperature cycle.

**Claims**

1. A cathode active material for a lithium secondary battery having a structure of a lithium transition metal oxide, wherein a ratio of a crystallite size of a (003) plane to a crystallite size of a (110) plane measured by an X-ray diffraction (XRD) analysis is in a range from 0.7 to 2.0, and a ratio of the crystallite size of the (003) plane to a crystallite size of a (104) plane measured by the XRD analysis is in a range from 0.7 to 2.0.

2. The cathode active material for a lithium secondary battery according to claim 1, wherein the crystallite size of the (003) plane measured by the XRD analysis is 350 nm or more.

3. The cathode active material for a lithium secondary battery according to claim 2, wherein the crystallite size of the (003) plane measured by the XRD analysis is in a range from 350 nm to 700 nm.

4. The cathode active material for a lithium secondary battery according to any one of claims 1 to 3, wherein the cathode active material has a single crystal form.

5. The cathode active material for a lithium secondary battery according to any one of claims 1 to 4, wherein the cathode active material has a layered structure.

6. The cathode active material for a lithium secondary battery according to any one of claims 1 to 5, wherein the ratio of the crystallite size of the (003) plane to the crystallite size of the (110) plane measured by the XRD analysis is in a range from 0.7 to 1.7.

7. The cathode active material for a lithium secondary battery according to any one of claims 1 to 6, wherein the ratio of the crystallite size of the (003) plane to the crystallite size of the (104) plane measured by the XRD analysis is in a range from 0.7 to 1.7.

8. The cathode active material for a lithium secondary battery according to any one of claims 1 to 7, wherein the crystallite size of the (104) plane measured by the XRD analysis is in a range from 300 nm to 760 nm, preferably from 300 nm to 750 nm.

9. The cathode active material for a lithium secondary battery according to any one of claims 1 to 8, wherein the crystallite size of the (110) plane measured by the XRD analysis is in a range from 300 nm to 700 nm, preferably greater than 300 nm and 700 nm or less.

10. The cathode active material for a lithium secondary battery according to any one of claims 1 to 9, wherein the lithium transition metal oxide includes nickel.

11. The cathode active material for a lithium secondary battery according to claim 10, wherein a content of nickel based on 100 mol% of total metal elements excluding lithium in the lithium transition metal oxide is 60 mol% or more.

12. The cathode active material for a lithium secondary battery according to any one of claims 10 and 11, wherein the lithium transition metal oxide further includes manganese.

13. The cathode active material for a lithium secondary battery according to claim 12, wherein the lithium transition metal oxide is represented by Chemical Formula 1:

[Chemical Formula 1] $\quad\quad Li_aNi_xMn_yM_{1-x-y}O_2$

wherein, in Chemical Formula 1, M includes at least one of Co, Mg, Sr, Ba, B, Al, Zr, Ti, Y and W, and $0.95 < a < 1.1$, $0.6 \leq x \leq 0.9$, and $0.04 \leq y \leq 0.3$.

14. A cathode for a lithium secondary battery, comprising:

a cathode current collector; and
a cathode active material layer disposed on at least one surface of the cathode current collector, the cathode active material layer including the cathode active material for a lithium secondary battery according to any one of claims 1 to 13.

15. A lithium secondary battery, comprising:

a cathode including the cathode active material for a lithium secondary battery according to any one of claims 1 to 13; and
an anode facing the cathode.

# FIG. 1

# FIG. 2

European Patent Office
Europäisches Patentamt
European Patent Office
Office européen des brevets

# EUROPEAN SEARCH REPORT

**Application Number**

EP 24 22 3570

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 092 786 A1 (SUMITOMO CHEMICAL CO [JP]) 23 November 2022 (2022-11-23)<br>* paragraphs [0011], [0083] - [0087], [0093] - [0095]; examples 1-3; table 1 *<br>- - - - - | 1-15 | INV.<br>C01G53/50<br>C01G53/504<br>C01G53/506<br>C01G53/84 |
| A | KR 2023 0063562 A (SK ON CO LTD [KR]) 9 May 2023 (2023-05-09)<br>* the whole document *<br>- - - - - | 1-15 | |
| A | EP 3 920 275 A1 (SUMITOMO CHEMICAL CO [JP]) 8 December 2021 (2021-12-08)<br>* paragraphs [0011], [0107], [0108]; examples 1-6; tables 1,2 *<br>- - - - - | 1-15 | |
| A | CN 116 387 500 A (TIANJIN B&M SCIENCE AND TECH CO LTD) 4 July 2023 (2023-07-04)<br>* the whole document *<br>-& EP 4 411 886 A1 (TIANJIN B&M SCIENCE AND TECH CO LTD [CN]) 7 August 2024 (2024-08-07)<br>- - - - - | 1-15 | |

**TECHNICAL FIELDS SEARCHED (IPC)**

C01G

The present search report has been drawn up for all claims

| Place of search | Date of completion of the search | Examiner |
|---|---|---|
| Munich | 6 May 2025 | King, Ruth |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 24 22 3570

06-05-2025

| Patent document cited in search report | | Publication date | Patent family member(s) | | Publication date |
|---|---|---|---|---|---|
| EP 4092786 | A1 | 23-11-2022 | CN | 114982012 A | 30-08-2022 |
| | | | EP | 4092786 A1 | 23-11-2022 |
| | | | JP | 6810287 B1 | 06-01-2021 |
| | | | JP | 2021114410 A | 05-08-2021 |
| | | | KR | 20220129545 A | 23-09-2022 |
| | | | US | 2023078896 A1 | 16-03-2023 |
| | | | WO | 2021145179 A1 | 22-07-2021 |
| KR 20230063562 | A | 09-05-2023 | NONE | | |
| EP 3920275 | A1 | 08-12-2021 | CN | 111971821 A | 20-11-2020 |
| | | | EP | 3920275 A1 | 08-12-2021 |
| | | | JP | 6650064 B1 | 19-02-2020 |
| | | | JP | 2020167042 A | 08-10-2020 |
| | | | KR | 20200117977 A | 14-10-2020 |
| | | | WO | 2020202708 A1 | 08-10-2020 |
| CN 116387500 | A | 04-07-2023 | CN | 116387500 A | 04-07-2023 |
| | | | EP | 4411886 A1 | 07-08-2024 |
| | | | WO | 2024131093 A1 | 27-06-2024 |
| EP 4411886 | A1 | 07-08-2024 | CN | 116387500 A | 04-07-2023 |
| | | | EP | 4411886 A1 | 07-08-2024 |
| | | | WO | 2024131093 A1 | 27-06-2024 |